# EUROPEAN PATENT SPECIFICATION

(11) **EP 3 526 953 B1**
(45) Date of publication and mention of the grant of the patent: **06.07.2022**
(21) Application number: 17790810.0
(22) Date of filing: 16.10.2017
(51) Int. Cl.: H04L 65/40, H04L 67/02, H04L 67/563, H04L 67/566, H04W 12/06, H04W 12/062, H04L 9/40

(54) **PORTAL AGGREGATION SERVICE MAPPING SUBSCRIBER DEVICE IDENTIFIERS TO PORTAL ADDRESSES TO WHICH CONNECTION AND AUTHENTICATION REQUESTS ARE REDIRECTED AND FACILITATING MASS SUBSCRIBER APPARATUS CONFIGURATION**
PORTALAGGREGATIONSDIENST ZUR VERKNÜPFUNG VON TEILNEHMERGERÄTEKENNUNGEN MIT PORTALADRESSEN ZU DEN VERBINDUNG- UND AUTHENTIFIZIERUNGSFRAGEN UMGELEITET WERDEN UND ZUR VEREINFACHUNG DER MASSENKONFIGURATION VON TEILNEHMERGERÄTEN
SERVICE D'AGRÉGATION DE PORTAILS ASSOCIANT LES IDENTIFIANTS D'ÉQUIPEMENTS D'ABONNÉS AUX ADRESSES DE PORTAILS VERS LESQUELS LES REQUÈTES DE CONNEXION ET D'AUTHENTIFICATION SONT REDIRIGÉES ET SIMPLIFIANT LA CONFIGURATION DE MASSE DES ÉQUIPEMENTS D'ABONNÉS

(30) Priority: 17.10.2016 GB 201617587
(43) Date of publication of application: 21.08.2019
(73) Proprietor: Global Reach Technology, Inc., San Jose, CA 95119 (US)
(72) Inventor: SPENCER, Christopher Alan, London Greater London WC2B 6PA (GB)
(74) Representative: Appleyard Lees IP LLP
(86) International application number: PCT/GB2017/053130
(87) International publication number: WO 2018/073572

(56) References cited:
- EP-A1- 2 472 911
- US-A1- 2006 059 092
- US-A1- 2006 258 417
- US-A1- 2008 240 016
- US-A1- 2012 315 901
- US-A1- 2015 089 592
- HAIDONG XIA ET AL: "Virtual Prepaid Tokens for Wi-Fi Hotspot Access", COMPUTATIONAL SYSTEMS BIOINFORMATICS CONFERENCE, 2004. CSB 2004. PROCE EDINGS. 2004 IEEE TAMPA, FL, USA 16-18 NOV. 2004, LOS ALAMITOS, CA, USA,IEEE (COMPUT. SOC, US, 16 November 2004 (2004-11-16), pages 232-239, XP010753159, DOI: 10.1109/LCN.2004.134 ISBN: 978-0-7695-2260-9

## Description

### FIELD

The invention relates to network communications methods and apparatus for communications via portals.

### BACKGROUND

A network portal (e.g. Web portal) is a website that serves as the point of access for information. They can provide network access control and procedures and are often accessible from multiple device types/platforms, such as mobile phones, laptops, personal computers, etc. For example, Web portals often provide a particular look and feel for organizations and enterprises. They can allow users to personalize the information presented in the portal, and are often used to provide points of data access, published content and searching. A Web portal is capable of providing users with easier network navigation, and may be presented to a network user in conjunction with other Web portals on the same page.

Large network operators, require being able to mass provision user equipment (UE) devices, such as home routers, access points and switches. The issue is that these devices whilst mass produced need provisioning with unique configurations for their locations and services they offer, even using provisioning services such as TR-69. A unique RADIUS/Captive Portal service redirect configuration has to be deployed to that edge device or network gateway to offer different venue branded services. For example a network operator may wish to deliver services to two separate establishments. A first establishment at Venue A has its own Wi-Fi captive portal and brand identity, offering free Wi-Fi. A second establishment at Venue B also has their own identity and services and they offer paid-for Wi-Fi. In a situation where equipment goes faulty or needs replacing at Venue A, the network operator must pre-provision the replacement equipment with the correct configuration before shipping to Venue A. However, if that provisioning is wrong, then a possible site visit is required to Venue A.

The invention addresses these matters. US 2008/0240016 A1 discloses IMS networks provisioning providing business-related content to wireless devices.

### SUMMARY

At its most general the invention resides in the idea of providing remote, or indirect, provisioning of portal configurations to a subscriber apparatus to avoid having to separately provisioning multiple subscriber apparatuses directly.

In a first aspect, the invention may provide a method in a communications network for connecting to the network a subscriber apparatus from amongst a plurality of subscriber apparatuses to a respective network portal apparatus from amongst a plurality of network portal apparatuses. The method includes providing a portal aggregation server storing a plurality of network portal addresses associated with the plurality of the network portal apparatuses and a plurality of subscriber identifiers which each identify a respective one of the plurality of subscriber apparatuses The method further includes the step, performed at the portal aggregation server, of receiving from a subscriber apparatus a connection request to connect to the network. The request comprises a subscriber identifier associated with the subscriber apparatus. The method includes mapping the received subscriber identifier to a network portal address, and redirecting the connection request to the network portal address so mapped.

In this way, instead of storing the necessary portal configuration information on subscriber apparatuses directly, this information is held centrally (e.g. remotely) and made available to the subscriber apparatuses when making desired network connections. The invention may allow a single configured user device to send its traffic to centrally configured load balanced aggregation service. The aggregation service may use a site identifier to determine the venue at which the user is situated (i.e. from which user traffic originates) and may then redirect that traffic and/or captive portal to the correct portal. This may allow venue devices (e.g. subscriber apparatus) to share a single configuration for ease and speed of deployment and service restoration.

A single configuration may be applied on the subscriber apparatus/apparatuses, on the specific network where aggregation is implemented. For example, a common SSID (Service Set Identifier) may be used in common for a plurality of subscriber apparatuses, the 'local' SSID of each subscriber apparatus may be left untouched. In this way, it is possible to configure the subscriber apparatuses with the address of the portal aggregation server so that all outgoing communications from the subscriber pass through the aggregation server.

The method may include the step, performed at the portal aggregation server, of applying an authentication protocol to a subscriber apparatus using the received subscriber identifier, wherein the redirecting is done on condition that subscriber apparatus is so authenticated. The aggregation server may be arranged to simply forward the authentication on the network portal address (i.e. the 'Account'). No authentication is required to be done by the aggregation server. In its simplest form, the aggregation server may match the subscriber apparatus against the correct authentication server (e.g. an AAA server, such as a RADIUS server) further upstream and proxies to that.

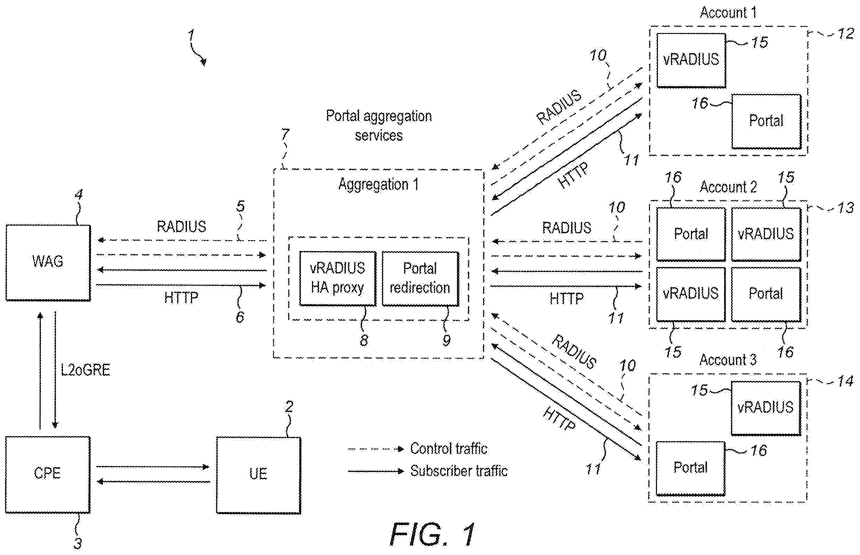

The method may include the step, performed at the portal aggregation server, of storing a portal redirection map comprising the plurality of network portal addresses and the plurality of subscriber identifiers. The aforesaid mapping may include matching the received subscriber identifier to a subscriber identifier stored within the redirection map and identifying a network portal addresses stored within the portal redirection map in association with the subscriber identifier which matches the received subscriber identifier. For example, all the subscriber apparatuses (e.g. see Fig.1: DSL routers, Wi-Fi AP's etc.) may communicate to a single aggregation server. The function of the aggregation server may be to proxy a connection request to the correct authentication server (e.g. an AAA server, such as a RADIUS server) based on e.g. a local lookup table. The benefit is all the subscriber apparatuses can be mass-configured.

The method may include the step, performed at the portal aggregation server, of mapping the received subscriber identifier to a plurality of the network portal addresses, and redirecting the connection request to the plurality of network portal address so mapped. An advantage of the invention is that multiple/all subscriber apparatuses may have a single configuration, and the redirection/proxy authentication and accounting (e.g. an AAA server, such as a RADIUS protocol) communications may be to the correct client (and its authentication server, e.g. an AAA server, such as a RADIUS server) from the aggregation server, for all subscribers aggregated with it. This streamlines both apparatus deployment and in-life repairs, as well as simplifying the setup of a network access gateway (e.g. a wireless access gateway, WAG) for the carrier's IT personnel. This means that the personnel not need to add a new configuration to the WAG whilst it is in-life, mitigating the risk of having to have an out-of-hours planned work window and outage window.

The method may include the step, performed at the portal aggregation server, of receiving from the plurality of the subscriber apparatuses a connection request to connect to the network wherein each request comprises the subscriber identifier associated with a respective subscriber apparatus. The method may include mapping each received subscriber identifier to a common network portal address, and redirecting the plurality of connection requests to the common network portal address so mapped.

In a second aspect, the invention may provide a network communications apparatus for connecting a subscriber apparatus from amongst a plurality of subscriber apparatuses to a respective network portal apparatus from amongst a plurality of network portal apparatuses, the apparatus including: a portal aggregation server arranged to store a plurality of network portal addresses associated with the plurality of the network portal apparatuses and a plurality of subscriber identifiers which each identify a respective one of the plurality of subscriber apparatuses; wherein the portal aggregation server is arranged to receive from a subscriber apparatus a connection request to connect to the network wherein the request comprises a subscriber identifier associated with the subscriber apparatus, and the portal aggregation server is responsive to a received connection request by mapping the received subscriber identifier to a network portal address, and redirecting the connection request to the network portal address so mapped. The apparatus may be arranged to identify a plurality of the subscriber apparatuses using a single, common configuration on the network where aggregation is implemented. For example, a common SSID (Service Set Identifier) may be used in common for a plurality of subscriber apparatuses, the 'local' SSID of each subscriber apparatus may be left untouched. In this way, it is possible to configure the subscriber apparatuses with the address of the portal aggregation server so that all outgoing communications from the subscriber pass through the aggregation server.

The portal aggregation server may be arranged to apply an authentication protocol to a subscriber apparatus using the received subscriber identifier, and to redirect the connection request to the mapped network portal address on condition that subscriber apparatus is so authenticated. The portal aggregation server may be arranged to simply forward the authentication on the network portal address (i.e. the 'Account'). No authentication is required to be done by the aggregation server. In its simplest form, the aggregation server may match the subscriber apparatus against the correct authentication server (e.g. an AAA server, such as a RADIUS server) further upstream and proxies to that

The portal aggregation server may be arranged to store a portal redirection map comprising the plurality of network portal addresses and the plurality of subscriber identifiers. The mapping may include matching the received subscriber identifier to a subscriber identifier stored within the redirection map and identifying a network portal addresses stored within the portal redirection map in association with the subscriber identifier which matches the received subscriber identifier. For example, all the subscriber apparatuses (e.g. see Fig.1: DSL routers, Wi-Fi AP's etc.) may communicate to a single aggregation server. The function of the aggregation server may be to proxy a connection request to the correct authentication server (e.g. an AAA server, such as a RADIUS server) based on e.g. a local lookup table. The benefit is all the subscriber apparatuses can be mass-configured.

The portal aggregation server may be arranged to map the received subscriber identifier to a plurality of the network portal addresses, and to redirect the connection request to the plurality of network portal address so mapped.

The portal aggregation server may be arranged to receive from the plurality of the subscriber apparatuses a connection request to connect to the network wherein each request comprises a subscriber identifier associated with a respective subscriber apparatus. The portal aggregation server may be arranged to map each received subscriber identifier to a common network portal address; and to redirect the plurality of connection requests to the common network portal address so mapped.

The portal aggregation server any authentication server(s) may comprise a server-class computer(s), or may comprise software adapted to implement the functions of an authentication server when executed on a computer programmed to execute the software. The portal aggregation server may comprise a data store(s) for storing network portal addresses, and the data store(s) may include a digital memory device(s), and may include a computer(s) and software arranged on the computer(s), or arranged for implementation/execution on such a computer(s), to manage the contents and entries in the digital memory store/read/retrieve/delete such contents as desired. The data store may be a cache, or may be a permanent memory system/device. For example, when the software of the data store is running, it may be arranged to cache or store data in the system memory, or RAM. For example, the software may be arranged to cache/store entries and data items into RAM or permanent memory (e.g. hard drive). Since RAM can be accessed much more quickly than a hard drive, this reduces lag when importing and retrieving files. An authentication server may comprise, or be in controlling communication with, a respective data store for this purpose.

In another aspect, the invention may provide a computer program product, or data carrier/store containing a computer program including instructions executable on a computer(s) to implement the method as described above. In another aspect, the invention may provide one or more computers programmed with computer program including instructions arranged, when executed, to implement the method as described above. In another aspect, the invention may provide a network of computers programmed with a computer program including instructions arranged, when executed, to implement the method as described above.

### BRIEF DESCRIPTION OF DRAWINGS

Figure 1 schematically illustrates a subscriber apparatus and the implementation of a network connection to a plurality of remote Web portals via a portal aggregation server;
Figure 2 schematically illustrates a flow chart of communications and commands transmitted between a subscriber apparatus, portal aggregation server and remote Web portals in implementing a network connection illustrated in Figure 1;
Figure 3 schematically illustrates a result of portal provisioning, at a subscriber apparatus, after making a network connection to three remote Web portals via a portal aggregation server as shown in Figures 1 and 2;
Figures 4A, 4B and 4C schematically illustrate the process of network access authentication according the 'captive portal' model;
Figure 5 schematically illustrates the use of a proxy RADIUS server in connection with a captive portal and network access server, to obtain authentication via a remote RADIUS server.

### DESCRIPTION OF EMBODIMENTS

A communications network typically permits users access to it via a network access point, or gateway. In many networks, such as public networks (e.g. the Internet) a user may be required to provide access credentials to the network access point before being permitted to access certain network services/websites etc. Only after these credentials have been verified by an authentication server/software, connected to the access point (or provided within it), is network access granted to the user. A 'captive portal' technique is a common mechanism for implementing a process of authentication for network access control.

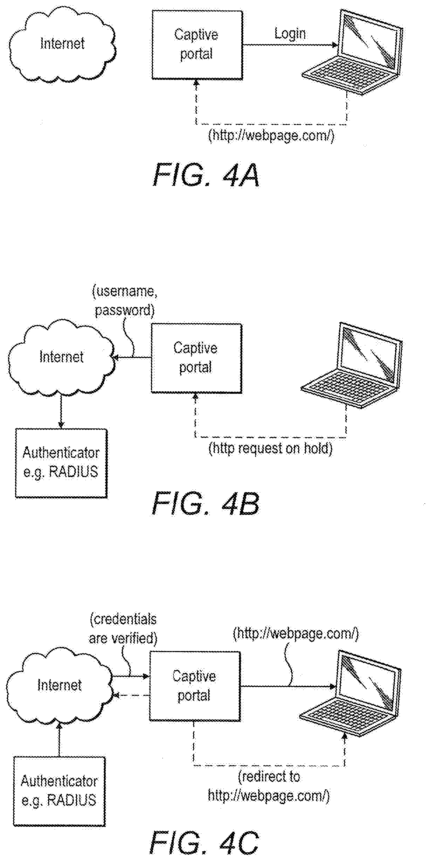

A network access request, using a captive portal, typically proceeds as follows, and as schematically illustrated in Figure 4A, Figure 4B and Figure 4C. A client/user activates their web browser to gain access to a desired network service (e.g. http://webpage.com/). They are directed to the captive portal (Fig.4A) where credentials are requested (e.g. password, user name etc.). The entered credentials are forwarded to a network access point (AP) or gateway, where they are checked/inspected (Fig.4B). Access to anything but the captive portal is prevented until/unless the user's credentials are verified. After the credentials are verified by the AP, by an AAA server using a RADIUS protocol for example, the user's computer receives a DHCP (Dynamic Host Configuration Protocol) lease enabling access to the network as requested (Fig.4C). The user may then access the network as desired (e.g. the Internet). Captive portals use the MAC or IP address of the client device as a unique identifier for that device.

### The RADIUS Protocol

The RADIUS protocol (Remote Authentication Dial In User Service) is an industry standard protocol for authentication, authorization, and accounting (AAA). It implements an AAA protocol. RADIUS is often the backend of choice for 802.1X authentication. Terminal servers or Network Access Server (NAS) use the RADIUS protocol to communicate AAA requests to, and return results from, a database of customer information. The RADIUS protocol may be defined in Internet Engineering Task Force (IETF) "RFC" documents, such as RFC 2058 and any one or more of the subsequent RFC documents which have obsoleted RFC 2058 and/or have themselves been obsoleted by successive RFC documents defining the RADIUS protocol (or aspects of it), such as any one of, or a combination of, RFC 3579, RFC 2866 and RFC 3580 or may be used RFC 6614 for example.

A RADIUS server uses the RADIUS protocol to provide AAA services. A RADIUS server performs AAA services required when customers use a terminal server or Network Access Server (NAS). The RADIUS server performs the following tasks:
- Authentication: Verifying a customers identity by checking the user name and password
- Authorization: Verifying a customers privileges for accessing the requested services
- Accounting: Tracking when customers log in and log out, and the duration of the sessions.

The term "Accounting" refers to tracking customer usage.

A common authentication tool is to use a so-called "captive portal". A captive portal uses a standard web browser to permit a user the opportunity to present login details/credentials to a network service, before access to that service is granted. The use of a web browser in this way means that many personal computer operating systems (laptops, PCs etc.) can support captive portals, and bespoke software is not required.

When a RADIUS server is used for authentication purposes, it may return one of two responses to the network access point: an 'Access Reject' response; or an 'Access Accept' response. An 'Access Reject' response occurs to deny access to the requested network resources if the user has failed to provide acceptable credentials. An 'Access Accept' response occurs when a user is granted access.

A RADIUS protocol/server has the ability to enable RADIUS protocol messages to be proxied (i.e. transmitted via a proxy server) to other RADIUS servers. This means that it becomes possible for a user of a first network (network A) to gain access to a second network (network B) by authenticating on the RADIUS server of the second network (network B). That is to say, the RADIUS authentication request at the first network may be proxied to another network employing a RADIUS protocol, to allow the user access to that other network.

When the RADIUS server of the first network (network A) receives an access/authentication request from a user desiring access to a second network (network B), connected to the first network, that request may be forwarded (proxied) to the RADIUS server of the second network (network B), instead of verifying the credentials of the user locally (at network A). The RADIUS server of the second network (network B) may then verify the user's credentials and send back to the RADIUS server of the first network, an 'access accept' message regarding the user's access request, thereby allowing access to the second network via the first network. This is known a 'federated access'.

A RADIUS proxy server is a device arranged to forward or route RADIUS connection requests and accounting messages between RADIUS clients (and RADIUS proxies) and RADIUS servers (or RADIUS proxies). The RADIUS proxy server uses information within the RADIUS message, such as the User-Name or Called-Station-ID RADIUS attributes, to route the RADIUS message to the appropriate RADIUS server. A RADIUS proxy server can be used as a forwarding point for RADIUS messages when the authentication, authorization, and accounting must occur at multiple RADIUS servers in different networks, locations or organizations. The RADIUS protocol is commonly used to facilitate roaming between internet service providers (ISP), for example by companies which provide a single global set of credentials that are usable on many public networks.

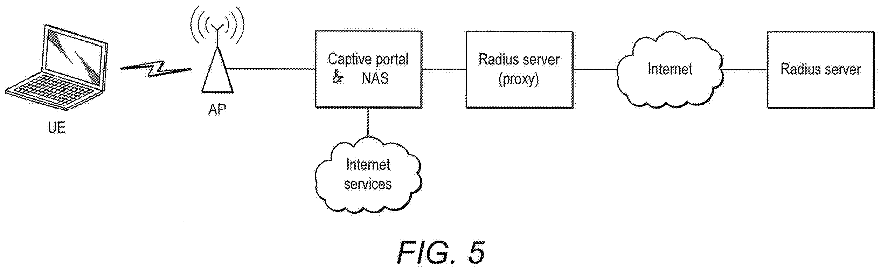

Figure 5 schematically illustrates the use of a RADIUS proxy server in connection with a captive portal, for providing AAA services using a remote RADIUS server accessible via an internet connection. The captive portal is provided to the user equipment (UE) from network access server (NAS), in response to the UE requesting access to internet services via a wireless network access point (AP). This arrangement permits network roaming by the UE in order to allow access to the internet services via different APs in different networks encountered due to the UE roaming to different locations.

Figure 1 schematically illustrates a user equipment (UE) 2, such as a personal computer, a laptop computer, a touch-pad computer or a smartphone, in the process of implementing a network connection to a plurality of remote Web portals (12, 13, 14) via a portal aggregation server 7. These components collectively form at least a part of a network 1 which may be a private intranet or may form part of the Internet.

The user apparatus 2 may be one from a plurality of similar user equipment (not shown) which each separately may interact with the portal aggregation server 7 in the manner described below. The portal aggregation server is arranged for connecting the user apparatus 2 to one or more network portal apparatuses from amongst a plurality of network portal apparatuses (12, 13 14). In this example, as discussed below, the portal aggregation server is arranged to connecting the user equipment 2 to three network portal apparatuses, but it should be understood that this number is purely for illustrative purposes and is not intended to be limiting.

The user equipment 2 is located in the premises of a customer of web-based the services provided via the plurality of remote Web portals (12, 13, 14) and is connected in communication with customer equipment located on the premises of the customer (customer premise equipment - CPE). For example, the customer premises may be an airport and the user equipment 2 may be a laptop of a traveller within the airport (e.g. airport lounge) wishing to access the Internet. The customer may wish to present to the user only certain Web services and/or certain services containing a certain a desired branding/look specified by the customer etc. For example, the customer may have its own Wi-Fi captive portal and brand identity, offering free Wi-Fi, or may offer only paid-for Wi-Fi. This bespoke provision is implemented by the customer equipment 3 being arranged to subscribe to predetermined/desired remote Web portals (12, 13, 14) which provide it with the services it wishes to present to its users (UE) 3.

Access to the Internet is provided to the customer premise equipment 3 via a wireless access gateway (WAG) equipment 4. This WAG equipment is arranged to communicate with portal aggregation server 7 to exchange subscriber traffic (e.g. content) to/from the subscribing CPE and the remote Web portals (12, 13, 14) providing that traffic, for provision to the user (UE). A HTTP protocol is employed for this traffic. The WAG equipment is also arranged to communicate with portal aggregation server 7 to exchange authentication/authorisation traffic according to a Remote Authentication Dial-In User Service (RADIUS) is a client/server protocol. The Remote Authentication Dial-In User Service (RADIUS) is a client/server protocol. It is a networking protocol that provides centralized Authentication, Authorization, and Accounting (AAA) management for users who connect and use a network service. The RADIUS protocol is often used by internet service providers and intranet users (e.g. within organisations) to manage access to the Internet or internal networks. The wireless access gateway (WAG) provides a network access server that controls access to the network 1, and contains a RADIUS client component that communicates with a proxy RADIUS server 8 within the portal aggregation server 7.

The proxy RADIUS server 8 acts as a gateway between the WAG and the network portal apparatuses (12, 13, 14) within a larger-scale network (e.g. internet or intranet). The proxy RADIUS server (e.g. a computer system or an application) acts as an intermediary for requests from the user equipment 2 seeking resources from network portal apparatuses. A user apparatus is able to connect to the proxy server, via the WAG 4 to request a service, such as a connection, web page, or other resource available from a network portal apparatus. The proxy server evaluates the request by applying a RADIUS protocol as a way to simplify and control its complexity. The aggregation server simply forwards the authentication on the network portal address (i.e. the 'Account').

The portal aggregation server stores a plurality of network portal addresses associated with the plurality of network portal apparatuses (12, 13, 14) and a plurality of subscriber identifiers which each identify a respective one of (e.g. subscriber 3, the CPE) a plurality of subscriber apparatuses (others not shown, for clarity). The portal aggregation server is arranged to receive from the/a subscriber apparatus 3 a connection request, such via the RADIUS protocol 5, to connect to the network. The request comprises the subscriber identifier associated with the subscriber equipment (i.e. the CPE) 3, and the portal aggregation server is responsive to a received connection request by mapping the received subscriber identifier to a network portal address, and redirecting the connection request to the network portal address so mapped. A redirection unit 9 is employed to implement this mapping and redirection. The redirection unit 9 operates in the same way as the RADIUS proxy server, with the difference that it is dealing with HTTP/HTTPS redirection of the user equipment (UE), based again on the local lookup. It is arranged to redirect the UE to the correct web portal (e.g. login page) much in the same way the RADIUS messaging is proxied to the correct upstream RADIUS server. The redirection unit 9 handles the web component of the redirection. The subscriber equipment is, in the present example, the CPE. It is the CPE that would require provisioning with appropriate portals, whereas the UE is typically a transient user who wishes to use the portal services available via the CPE.

The portal aggregation server is arranged to store a portal redirection map comprising the network portal addresses of the three portal apparatuses (12, 13, 14) and the plurality of subscriber identifiers - including the identifier for the CPE 3. Examples of a subscriber identifier include, but are not limited to: Subscriber apparatus IP address; DHCP Option 82; WAG injection of a RADIUS attribute (e.g. SubscriberlD, HouseHoldID, LinelD, APMAC, MAC). Different carriers may employ different WAG configurations, and these may use different identifiers. Preferred embodiments of the invention allow for any combination of lookup against META Data in memory cache.

The mapping includes matching the received subscriber identifier to a subscriber identifier stored within the redirection map and identifying a network portal addresses stored within the portal redirection map in association with the subscriber identifier which matches the received subscriber identifier. The portal aggregation server is arranged to map the received subscriber identifier to a plurality of network portal addresses, and to redirect the connection request to the plurality of network portal address so mapped.

The portal aggregation server may be arranged to receive from the plurality of subscriber apparatuses (i.e. including CPE, 3, and others) a connection request to connect to the network. Each request may comprise a subscriber identifier associated with a respective subscriber apparatus. The portal aggregation server may be arranged to map each received subscriber identifier to a common network portal address, and to redirect the plurality of connection requests to the common network portal address so mapped.

In summary, the end user device (UE) requesting traffic at a location the CPE passes this traffic to the WAG. The WAG routes the traffic to the Portal Aggregation Server which decides which Venue Account (i.e. Account1; Account 2; or, Account 3) this should be redirected to. This simplifies both the CPE and the WAG configuration.

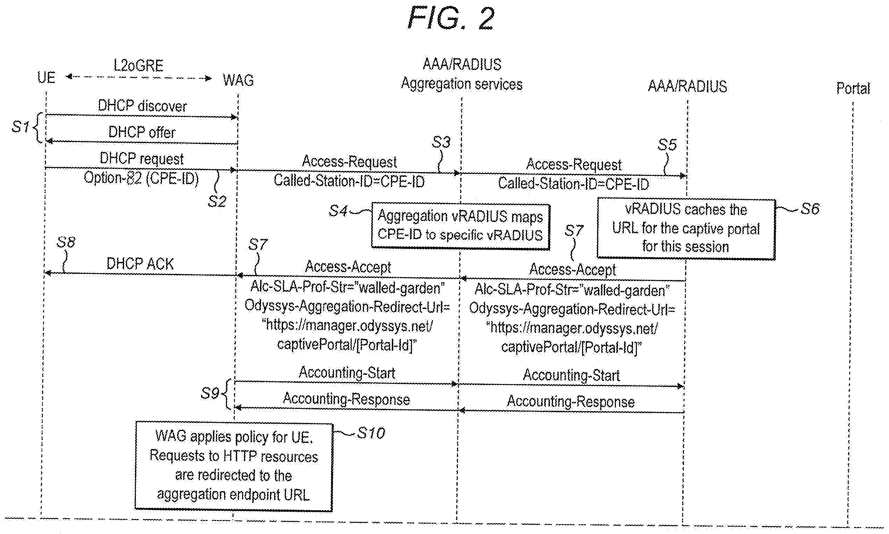

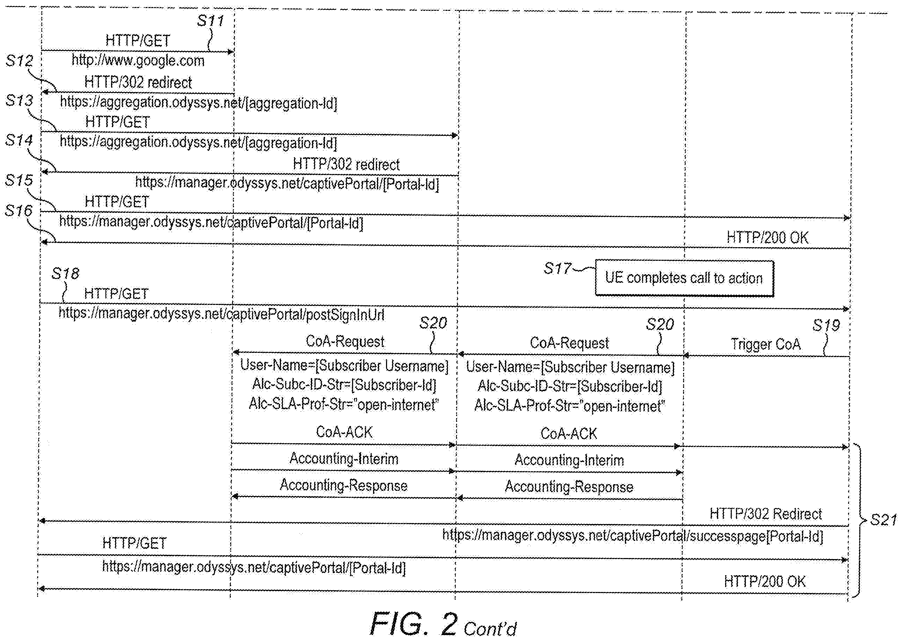

Figure 2 schematically illustrates a 'Call Flow' as between the user equipment (UE) 2 of the subscriber, the wireless access gateway (WAG) 4 via which the user equipment accesses the network (internet or intranet), the portal aggregation server 7 and its proxy RADIUS server 8, and a network portal apparatus (12, 13 or 14). The sequence of communications between these components is as follows.

### Event Sequence

First, at step S1, the user equipment (UE) 2 is allocated an IP address by the DHCP server. To do so, the UE transmits a 'DCHP Discover' message to the WAG, and receives from it a 'DCHP Offer' message in response. Carriers may handle this step themselves, and this can be implemented in various places. For example, the WAG might use DHCP relay from a core router.

Next, at step S2, the customer premise equipment (CPE) 3 adds DHCP 'Option 82' to the 'DHCP Request', which includes identifier for the CPE ('CPE-ID'). This could be the MAC address of the access point (AP) or an arbitrary value specific to the CPE. The CPE may be a DSL Router, AP or WLAN controller. The WAG then sends, at step S3, a RADIUS protocol 'Access-Request' to the Portal Aggregation server 7 including the DHCP 'Option 82' in the 'Called-Station-Id' RADIUS protocol attribute ('Called-Station-Id=CPE-ID'). The Called-Station-Id RADIUS attribute' is a standard RADIUS protocol attribute, however, the invention may use any identifier as explained above: Source IP, UEMAC, LinelD, etc.

The Portal Aggregation server 7 then, at step S4, attempts to match the Access-Request to a vRADIUS server based on the aggregation mapping, by mapping the received 'CPE-ID' to the specific vRADIUS server. In this example, the 'Called-Station-Id' attribute is used for mapping and contains the DHCP 'option 82' value containing the CPE identifier ('CPE-ID'). For example, an identifier such as the 'Called-Station-Id' may be seen/identified on the RADIUS messaging. This may be compared to entries in a local look up, in memory cache, and used to work out which RADIUS server this request should be proxied to.

When matched successfully, during step S4, the RADIUS proxy server 8 of the Aggregation server 7 sends the 'Access-Request' to the RADIUS server that it was mapped to, at step S5. The phrase vRADIUS may be understood herein to refer to the upstream RADIUS server 15 which the original aggregation RADIUS proxy server 8 proxies the request on to.

The upstream vRADIUS server 15 will, at step S6, cache the URL for the captive portal for the session being requested, and subsequently, at step S7, and further respond to the WAG (via the proxy RADIUS server 8 of the Aggregation server 7) with an 'Access-Accept' message specifying the actual captive portal URL to which the UE is to be redirected when attempting to access a HTTP resource outside of the walled garden. An example is:

```
    Alc-SLA-Prof-Str = "walled-garden"
    Odyssys-Aggregation-Redirect-Url = "https://manag-
    er.odyssys.net/captivePortal/[Portal-Id]"
```

This is communicated to the UE by the WAG via a 'DHCP ACK' message, at step S8. For example, prior to a UE being authenticated, it is preferably redirected to a web login page, often called a 'captive portal'. This lies within a 'walled garden' of allowed resources, pages, images, css files, js etc. which a UE can have access to before it is authenticated. Additional VSAs are contained within the 'Access-Accept' message which are required to setup the Subscriber session on the WAG.

If no match was found for the aggregation mapping, the Aggregation server 7 will respond to the WAG with an 'Access-Reject' message, via the proxy RADIUS server 8 of the Aggregation server 7.

The WAG responds to the 'Access-Accept' message by exchanging 'Accounting Start' and 'Accounting Response' messages with the upstream RADIUS server 15, at step S9, and by setting up the Subscriber session applying the policy specified by the WAG RADIUS VSA, at step S10. The term 'VSA' is a RADIUS term meaning Vendor Specific Attribute. The WAG determines, at step S10, that requests to the HTTP resources are redirected to the endpoint URL identified by the Aggregation server 7.

The UE then makes an attempt, at step S11, to access a HTTP resource (e.g. http://google.com) that is outside of the walled garden. This is intercepted by the WAG which responds, at step S12, with an 'HTTP/302 redirect' message pointing to the AAA Aggregation endpoint URL identified by the mapping process conducted by the Aggregation server 7 at step S4. An example is:
https://aggregation.odyssys.net/[aggregation-Id]

The UE requests from the Aggregation server 7, at step S13, the AAA endpoint URL (identified by the mapping process conducted by the Aggregation server 7 at step S4), which includes the 'Subscriber session ID' specified within the query string fragment of the URL.

At step S14, the Aggregation server 7 looks up the session context in the cache 9 ('Portal Redirection') of the Aggregation server 7, and responds with a 'HTTP/302' redirect to the actual captive portal URL.

At steps S15 to S18, the UE completes the call to action, with the Captive Portal, and is authorized for internet service. An example is:
https://manager.odyssys.net/captivePortal/postSignInUrl

This could include registration for free access, acceptance or terms and conditions, payment for service or simply click to connect.

The Captive Portal triggers the CoA request from the vRADIUS server, at step S19, and at step S20 this is then proxied to the Aggregation server 7, and then to the WAG. An example is:

```
 User-Name = [Subscriber Username]
 Alc-Subsc-ID-Str = [Subscriber-Id]
 Alc-SLA-Prof-Str = "open-internet"
```

This contains the new Subscriber policy to apply to the Subscriber session as well as the User-Name associated with the Subscriber. The term 'CoA' refers to a Change of Authority. This is a known method to change a UE from being un-authenticated to being authenticated on a WAG. The UE is redirected, at steps S20, to the captive portal success page URL. An example is:
https://manager.odyssys.net/captivePortal/successpage/[Portal-Id]

Acknowledgement and Accounting messages may then be exchanged, in the usual way, between the UA and the portal 16 of the Account to which the UE has now become connected. An example of a connection message to the portal from the UE is:
https://manager.odyssys.net/captivePortal/[Portal-Id]

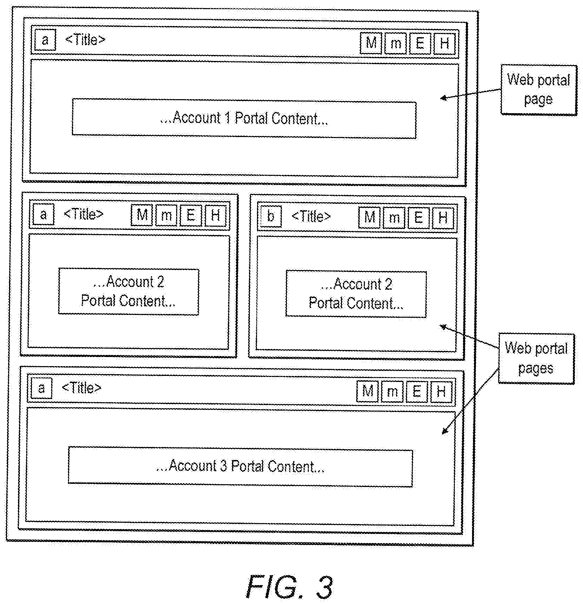

Figure 3 schematically illustrates a result of portal provisioning, at the subscriber apparatus 2, after making a network connection to three remote Web portals (12, 13, 14) via the portal aggregation server 7 as described above with reference to Figures 1 and 2. Web portal pages are provided at a display 30 of the user apparatus 2 from Web portal addresses corresponding to the Web service Accounts 1, 2 and 3 to which the user subscribes, as required by the user. Multiple Web portal pages, or multiple portlets, may be provided from one Account, such as Account 2, illustrated in Figure 1 and Figure 3.

Portlets are web components designed to be aggregated in the context of a composite page. Multiple portlets may be invoked to in the single request for a portal page. Each portlet produces a fragment of markup that is combined with the markup of other portlets, all within the portal page markup. Figure 3 schematically shows an example of this in terms of two portlets from Account 2 (Fig.1) displayed together on the display 30 of the user apparatus 2. Fig.1 shows one customer premise equipment (CPE) 3 accessing three different Accounts (Accounts 1, 2 and 3). Each Account provides a web portal. Each portal may be branded in the same way, e.g. as 'CoffeeCo' etc. For example, it may be that CoffeCo (Account 1) has a temporary partner brand on their web portal where as CoffeeCo (Account 2) has the company's default brand. When a user accesses the CoffeeCo site in association with the partner, the user sees a portal from Account 1 and otherwise they would see a portal of Account 2 etc.

## Claims

1. A method in a communications network for connecting to the network a subscriber apparatus from amongst a plurality of subscriber apparatuses to a respective network portal apparatus from amongst a plurality of network portal apparatuses, the method including:
providing a portal aggregation server storing a plurality of network portal addresses associated with the plurality of said network portal apparatuses and a plurality of subscriber identifiers which each identify a respective one of said plurality of subscriber apparatuses;
at the portal aggregation server, receiving (S3) from a said subscriber apparatus a connection request to connect to the network wherein the request comprises a said subscriber identifier associated with the subscriber apparatus and mapping (S4) the received subscriber identifier to a said network portal address, and redirecting (S14-S21) the connection request to the network portal address so mapped,
the method **characterised by:**
the portal aggregation server comprising a proxy server and each of the network portal apparatuses comprises a respective authentication server, and
wherein the redirecting the connection request comprises redirecting the connection request via the proxy server to the respective authentication server of the network portal address so mapped.

2. A method according to any preceding claim including, at the portal aggregation server:
applying (S7) an authentication protocol to a subscriber apparatus using the received subscriber identifier, wherein said redirecting is done on condition that subscriber apparatus is so authenticated.

3. A method according to any preceding claim including, at the portal aggregation server:
storing a portal redirection map comprising said plurality of network portal addresses and said plurality of subscriber identifiers; wherein said mapping (S4) includes matching the received subscriber identifier to a subscriber identifier stored within the redirection map and identifying a network portal addresses stored within the portal redirection map in association with the subscriber identifier which matches the received subscriber identifier.

4. A method according to any preceding claim including, at the portal aggregation server:
mapping (S4) the received subscriber identifier to a plurality of said network portal addresses; and redirecting (S14-S21) the connection request to the plurality of network portal address so mapped.

5. A method according to any preceding claim including, at the portal aggregation server:
receiving (S3) from plurality of said subscriber apparatuses a connection request to connect to the network wherein each request comprises a said subscriber identifier associated with a respective subscriber apparatus; and mapping (S4) each received subscriber identifier to a common network portal address; and redirecting (S14-S21) the plurality of connection requests to the common network portal address so mapped.

6. A network communications apparatus for connecting a subscriber apparatus (2) from amongst a plurality of subscriber apparatuses to a respective network portal apparatus from amongst a plurality of network portal apparatuses (12, 13, 14), the apparatus including:
a portal aggregation server (7) arranged to store a plurality of network portal addresses associated with the plurality of said network portal apparatuses and a plurality of subscriber identifiers which each identify a respective one of said plurality of subscriber apparatuses;
wherein the portal aggregation server is arranged to receive from a said subscriber apparatus a connection request to connect to the network wherein the request comprises a said subscriber identifier associated with the subscriber apparatus, and the portal aggregation server is responsive to a received connection request by mapping the received subscriber identifier to a said network portal address, and redirecting the connection request to the network portal address so mapped,
the apparatus **characterised in that:**
the portal aggregation server comprises a proxy server (8) and each of the network portal apparatuses comprises a respective authentication server (15), and
wherein the redirecting the connection request comprises redirecting the connection request via the proxy server to the respective authentication server of the network portal address so mapped.

7. A network communications apparatus according to claim 6 in which the portal aggregation server (7) is arranged to apply an authentication protocol to a subscriber apparatus (2) using the received subscriber identifier, and to redirect the connection request to the mapped network portal address on condition that subscriber apparatus is so authenticated.

8. A network communications apparatus according to any of claims 6 or 7 in which the portal aggregation server (7) is arranged to store a portal redirection map comprising said plurality of network portal addresses and said plurality of subscriber identifiers; wherein said mapping includes matching the received subscriber identifier to a subscriber identifier stored within the redirection map and identifying a network portal addresses stored within the portal redirection map in association with the subscriber identifier which matches the received subscriber identifier.

9. A network communications apparatus according to any of claims 6 to 8 in which the portal aggregation server (7) is arranged to map the received subscriber identifier to a plurality of said network portal addresses; and to redirect the connection request to the plurality of network portal address so mapped.

10. A network communications apparatus according to any of claims 6 to 9 in which the portal aggregation server (7) is arranged to receive from said plurality of said subscriber apparatuses (2) a connection request to connect to the network wherein each request comprises a said subscriber identifier associated with a respective subscriber apparatus; and to map each received subscriber identifier to a common network portal address; and to redirect the plurality of connection requests to the common network portal address so mapped.

11. A computer program product, or data carrier/store containing a computer program including instructions executable on a computer(s) to implement the method according to any of claims 1 to 5.

12. One or more computers programmed with computer program including instructions arranged, when executed, to implement the method according to any of claims 1 to 5.

13. A network of computers programmed with a computer program including instructions arranged, when executed, to implement the method according to any of claims 1 to 5.

## Patentansprüche

1. Verfahren in einem Kommunikationsnetz zum Herstellen einer Verbindung zum Netz zwischen einer Teilnehmereinrichtung aus einer Vielzahl von Teilnehmereinrichtungen und einer jeweiligen Netzportaleinrichtung aus einer Vielzahl von Netzportaleinrichtungen, wobei das Verfahren Folgendes beinhaltet:
Bereitstellen eines Portalaggregationsservers, der eine Vielzahl von Netzportaladressen, die der Vielzahl der Netzportaleinrichtungen zugewiesen ist, und eine Vielzahl von Teilnehmerkennungen, die je eine jeweilige der Vielzahl von Teilnehmereinrichtungen identifizieren, speichert;
am Portalaggregationsserver Empfangen (S3) einer Verbindungsanforderung, um eine Verbindung zum Netz herzustellen, von einer der Teilnehmereinrichtungen, wobei die Anforderung eine der Teilnehmerkennungen, die der Teilnehmereinrichtung zugewiesen ist, umfasst, und Zuordnen (S4) der empfangenen Teilnehmerkennung zu einer der Netzportaladressen und Umleiten (S14-S21) der Verbindungsanforderung an die hierdurch zugeordnete Netzportaladresse,
wobei das Verfahren **dadurch gekennzeichnet ist, dass**
der Portalaggregationsserver einen Proxyserver umfasst und jede der Netzportaleinrichtungen einen jeweiligen Authentifizierungsserver umfasst,
wobei das Umleiten der Verbindungsanforderung umfasst, dass die Verbindungsanforderung über den Proxyserver an den jeweiligen Authentifizierungsserver der hierdurch zugeordneten Netzportaladresse umgeleitet wird.

2. Verfahren nach einem vorhergehenden Anspruch, das Folgendes am Portalaggregationsserver beinhaltet:
Anwenden (S7) eines Authentifizierungsprotokolls auf eine Teilnehmereinrichtung unter Nutzung der empfangenen Teilnehmerkennung, wobei das Umleiten unter der Bedingung erfolgt, dass die Teilnehmereinrichtung hierdurch authentifiziert wird.

3. Verfahren nach einem vorhergehenden Anspruch, das Folgendes am Portalaggregationsserver beinhaltet:
Speichern einer Portalumleitungszuordnung, die die Vielzahl von Netzportaladressen und die Vielzahl von Teilnehmerkennungen umfasst; wobei das Zuordnen (S4) beinhaltet, dass die empfangene Teilnehmerkennung mit einer in der Umleitungszuordnung gespeicherten Teilnehmerkennung abgeglichen wird und Netzportaladressen, die in der Portalumleitungszuordnung in Verbindung mit der Teilnehmerkennung gespeichert sind, die mit der empfangenen Teilnehmerkennung übereinstimmt, identifiziert werden.

4. Verfahren nach einem vorhergehenden Anspruch, das Folgendes am Portalaggregationsserver beinhaltet:
Zuordnen (S4) der empfangenen Teilnehmerkennung zu einer Vielzahl der Netzportaladressen; und Umleiten (S14-S21) der Verbindungsanforderung an die hierdurch zugeordnete Vielzahl von Netzportaladressen.

5. Verfahren nach einem vorhergehenden Anspruch, das Folgendes am Portalaggregationsserver beinhaltet:
Empfangen (S3) einer Verbindungsanforderung, um eine Verbindung zum Netz herzustellen, von der Vielzahl der Teilnehmereinrichtungen, wobei jede Anforderung eine der Teilnehmerkennungen, die einer jeweiligen Teilnehmereinrichtung zugewiesen ist, umfasst; und
Zuordnen (S4) jeder empfangenen Teilnehmerkennung zu einer gemeinsamen Netzportaladresse; und Umleiten (S14-S21) der Vielzahl von Verbindungsanforderungen an die hierdurch zugeordnete gemeinsame Netzportaladresse.

6. Netzkommunikationseinrichtung zum Verbinden einer Teilnehmereinrichtung (2) aus einer Vielzahl von Teilnehmereinrichtungen mit einer jeweiligen Netzportaleinrichtung aus einer Vielzahl von Netzportaleinrichtungen (12, 13, 14), wobei die Einrichtung Folgendes aufweist:
einen Portalaggregationsserver (7), der dazu ausgelegt ist, eine Vielzahl von Netzportaladressen, die der Vielzahl der Netzportaleinrichtungen zugewiesen ist, und eine Vielzahl von Teilnehmerkennungen, die je eine jeweilige der Vielzahl von Teilnehmereinrichtungen identifizieren, zu speichern;
wobei der Portalaggregationsserver dazu ausgelegt ist, von einer der Teilnehmereinrichtungen eine Verbindungsanforderung, um eine Verbindung zum Netz herzustellen, zu empfangen, wobei die Anforderung eine der Teilnehmerkennungen, die der Teilnehmereinrichtung zugewiesen ist, umfasst und der Portalaggregationsserver auf eine empfangene Verbindungsanforderung durch Zuordnen der empfangenen Teilnehmerkennung zu einer der Netzportaladressen und Umleiten der Verbindungsanforderung an die hierdurch zugeordnete Netzportaladresse reagiert,
wobei die Einrichtung **dadurch gekennzeichnet ist, dass**
der Portalaggregationsserver einen Proxyserver (8) umfasst und jede der Netzportaleinrichtungen einen jeweiligen Authentifizierungsserver (15) umfasst,
wobei das Umleiten der Verbindungsanforderung umfasst, dass die Verbindungsanforderung über den Proxyserver an den jeweiligen Authentifizierungsserver der hierdurch zugeordneten Netzportaladresse umgeleitet wird.

7. Netzkommunikationseinrichtung nach Anspruch 6, wobei der Portalaggregationsserver (7) dazu ausgelegt ist, ein Authentifizierungsprotokoll unter Nutzung der empfangenen Teilnehmerkennung auf eine Teilnehmereinrichtung (2) anzuwenden und die Verbindungsanforderung an die zugeordnete Netzportaladresse unter der Bedingung umzuleiten, dass die Teilnehmereinrichtung hierdurch authentifiziert wird.

8. Netzkommunikationseinrichtung nach Anspruch 6 oder 7, wobei der Portalaggregationsserver (7) dazu ausgelegt ist, eine Portalumleitungszuordnung, die die Vielzahl von Netzportaladressen und die Vielzahl von Teilnehmerkennungen umfasst, zu speichern; wobei das Zuordnen beinhaltet, dass die empfangene Teilnehmerkennung mit einer in der Umleitungszuordnung gespeicherten Teilnehmerkennung abgeglichen wird und Netzportaladressen, die in der Portalumleitungszuordnung in Verbindung mit der Teilnehmerkennung gespeichert sind, die mit der empfangenen Teilnehmerkennung übereinstimmt, identifiziert werden.

9. Netzkommunikationseinrichtung nach einem der Ansprüche 6 bis 8, wobei der Portalaggregationsserver (7) dazu ausgelegt ist, die empfangene Teilnehmerkennung einer Vielzahl der Netzportaladressen zuzuordnen und die Verbindungsanforderung an die hierdurch zugeordnete Vielzahl von Netzportaladressen umzuleiten.

10. Netzkommunikationseinrichtung nach einem der Ansprüche 6 bis 9, wobei der Portalaggregationsserver (7) dazu ausgelegt ist, von der Vielzahl der Teilnehmereinrichtungen (2) eine Verbindungsanforderung, um eine Verbindung zum Netz herzustellen, zu empfangen, wobei jede Anforderung eine der Teilnehmerkennungen, die einer jeweiligen Teilnehmereinrichtung zugewiesen ist, umfasst, und jede empfangene Teilnehmerkennung einer gemeinsamen Netzportaladresse zuzuordnen und die Vielzahl von Verbindungsanforderungen an die hierdurch zugeordnete gemeinsame Netzportaladresse umzuleiten.

11. Computerprogrammprodukt oder Datenträger/-speicher, das/der ein Computerprogramm enthält, das auf einem Computer (oder mehreren Computern) ausführbare Befehle zum Implementieren des Verfahrens nach einem der Ansprüche 1 bis 5 aufweist.

12. Computer, der mit einem Computerprogramm programmiert ist, oder Computer, die mit einem Computerprogramm programmiert sind, wobei das Computerprogramm Befehle aufweist, die dazu ausgelegt sind, bei ihrer Ausführung das Verfahren nach einem der Ansprüche 1 bis 5 zu implementieren.

13. Netz von Computern, die mit einem Computerprogramm programmiert sind, wobei das Computerprogramm Befehle aufweist, die dazu ausgelegt sind, bei ihrer Ausführung das Verfahren nach einem der Ansprüche 1 bis 5 zu implementieren.

## Revendications

1. Procédé dans un réseau de communication permettant de connecter au réseau un appareil d'abonnés parmi une pluralité d'appareils d'abonnés à un appareil de portail de réseau respectif parmi une pluralité d'appareils de portails de réseau, le procédé comprenant :
la fourniture d'un serveur d'agrégation de portails stockant une pluralité d'adresses de portails de réseau associées à la pluralité desdits appareils de portails de réseau et à une pluralité d'identifiants d'abonnés, chacun identifiant un appareil respectif parmi ladite pluralité d'appareils d'abonnés ;
au niveau du serveur d'agrégation de portails, la réception (S3) à partir d'un dit appareil d'abonnés d'une demande de connexion de se connecter au réseau dans lequel la demande comprend un dit identifiant d'abonné associé à l'appareil d'abonnés et le mappage (S4) de l'identifiant d'abonné reçu à une dite adresse de portails de réseau, et la redirection (S14-S21) de la demande de connexion vers l'adresse de portails de réseau ainsi mappée,
le procédé est **caractérisé par** :
le serveur d'agrégation de portails comprenant un serveur mandataire et chacun des appareils de portails de réseau comprend un serveur d'authentification respectif, et
dans lequel la redirection de la demande de connexion comprend la redirection de la demande de connexion par l'intermédiaire du serveur mandataire vers le serveur d'authentification respectif de l'adresse de portails de réseau ainsi mappée.

2. Procédé selon l'une quelconque des revendications précédentes incluant, au niveau du serveur d'agrégation de portails :
l'application (S7) d'un protocole d'authentification à un appareil d'abonnés en utilisant l'identifiant d'abonné reçu, dans lequel ladite redirection est effectuée à condition que l'appareil d'abonnés soit ainsi authentifié.

3. Procédé selon l'une quelconque des revendications précédentes incluant, au niveau du serveur d'agrégation de portails :
le stockage d'une carte de redirection de portails comprenant ladite pluralité d'adresses de portails de réseau et ladite pluralité d'identifiants d'abonnés ;
dans lequel ledit mappage (S4) inclut la mise en correspondance de l'identifiant d'abonné reçu avec un identifiant d'abonné stocké dans la carte de redirection et l'identification d'adresses de portails de réseau stockées dans la carte de redirection de portails en association avec l'identifiant d'abonné qui correspond à l'identifiant d'abonné reçu.

4. Procédé selon l'une quelconque des revendications précédentes incluant, au niveau du serveur d'agrégation de portails :
le mappage (S4) de l'identifiant d'abonné reçu à une pluralité desdites adresses de portails de réseau ;
et la redirection (S14-S21) de la demande de connexion vers la pluralité d'adresses de portails de réseau ainsi mappées.

5. Procédé selon l'une quelconque des revendications précédentes incluant, au niveau du serveur d'agrégation de portails :
la réception (S3) à partir d'une pluralité desdits appareils d'abonnés d'une demande de connexion de se connecter au réseau dans lequel chaque demande comprend un dit identifiant d'abonné associé à un appareil d'abonnés respectif ; et le mappage (S4) de chaque identifiant d'abonné reçu à une adresse de portails de réseau commune ; et la redirection (S14-S21) de la pluralité de demandes de connexion vers l'adresse de portails de réseau commune ainsi mappée.

6. Appareil de communication de réseau permettant de connecter un appareil d'abonnés (2) parmi une pluralité d'appareils d'abonnés à un appareil de portails de réseau respectif parmi une pluralité d'appareils de portails de réseau (12, 13, 14), l'appareil incluant :
un serveur d'agrégation de portails (7) conçu pour stocker une pluralité d'adresses de portails de réseau associées à la pluralité desdits appareils de portails de réseau et à une pluralité d'identifiants d'abonnés, chacun identifiant un appareil respectif parmi ladite pluralité d'appareils d'abonnés ;
dans lequel le serveur d'agrégation de portails est conçu pour recevoir à partir d'un dit appareil d'abonnés une demande de connexion de se connecter au réseau dans lequel la demande comprend un dit identifiant d'abonné associé à l'appareil d'abonnés, et le serveur d'agrégation de portails répond à une demande de connexion reçue en mappant l'identifiant d'abonné reçu à une dite adresse de portails de réseau, et rediriger la demande de connexion vers l'adresse de portails de réseau ainsi mappée,
l'appareil est **caractérisé en ce que** :
le serveur d'agrégation de portails comprend un serveur mandataire (8) et chacun des appareils de portails de réseau comprend un serveur d'authentification respectif (15), et
dans lequel la redirection de la demande de connexion comprend la redirection de la demande de connexion par l'intermédiaire du serveur mandataire vers le serveur d'authentification respectif de l'adresse de portails de réseau ainsi mappée.

7. Appareil de communication de réseau selon la revendication 6 dans lequel le serveur d'agrégation de portails (7) est conçu pour appliquer un protocole d'authentification à un appareil d'abonnés (2) utilisant l'identifiant d'abonné reçu, et pour rediriger la demande de connexion à l'adresse de portails de réseau mappée à condition que l'appareil d'abonnés soit ainsi authentifié.

8. Appareil de communication de réseau selon l'une quelconque des revendications 6 ou 7 dans lequel le serveur d'agrégation de portails (7) est conçu pour stocker une carte de redirection de portails comprenant ladite pluralité d'adresses de portails de réseau et ladite pluralité d'identifiants d'abonnés ; dans lequel ledit mappage inclut la mise en correspondance de l'identifiant d'abonné reçu avec un identifiant d'abonné stocké dans la carte de redirection et l'identification d'adresses de portails de réseau stockées dans la carte de redirection de portails en association avec l'identifiant d'abonné qui correspond à l'identifiant d'abonné reçu.

9. Appareil de communication de réseau selon l'une quelconque des revendications 6 à 8 dans lequel le serveur d'agrégation de portails (7) est conçu pour mapper l'identifiant d'abonné reçu à une pluralité desdites adresses de portails de réseau ; et pour rediriger la demande de connexion vers la pluralité d'adresses de portails de réseau ainsi mappées.

10. Appareil de communication de réseau selon l'une quelconque des revendications 6 à 9 dans lequel le serveur d'agrégation de portails (7) est conçu pour recevoir à partir de ladite pluralité desdits appareils d'abonnés (2) une demande de connexion de se connecter au réseau dans lequel chaque demande comprend un dit identifiant d'abonné associé à un appareil d'abonnés respectif ; et mapper chaque identifiant d'abonné reçu à une adresse de portails de réseau commune ; et rediriger la pluralité de demandes de connexion vers l'adresse de portails de réseau commune ainsi mappée.

11. Produit de programme informatique ou support/stockage de données contenant un programme informatique incluant des instructions exécutables sur un ou des ordinateurs pour mettre en œuvre le procédé selon l'une quelconque des revendications 1 à 5.

12. Un ou plusieurs ordinateurs programmés avec un programme informatique incluant des instructions conçues pour, lorsqu'elles sont exécutées, mettre en œuvre le procédé selon l'une quelconque des revendications 1 à 5.

13. Réseau d'ordinateurs programmé avec un programme informatique incluant des instructions conçues pour, lorsqu'elles sont exécutées, mettre en œuvre le procédé selon l'une quelconque des revendications 1 à 5.
